# EUROPEAN PATENT SPECIFICATION

(11) **EP 3 166 841 B1**
(45) Date of publication and mention of the grant of the patent: **02.12.2020**
(21) Application number: 15729847.2
(22) Date of filing: 18.06.2015
(51) Int. Cl.: B62J 1/08, B62J 1/00

(54) **BICYCLE SADDLE ASSEMBLY**
FAHRRADSATTELANORDNUNG
ENSEMBLE DE SELLE DE BICYCLETTE

(30) Priority: 10.07.2014 IT MI20141258
(43) Date of publication of application: 17.05.2017
(73) Proprietor: Selle Royal S.p.A., 36050 Pozzoleone (Vicenza) (IT)
(72) Inventor: MORELLI, Angelo, 29010 Pontenure (Piacenza) (IT)
(74) Representative: Feltrinelli, Secondo Andrea
(86) International application number: PCT/EP2015/063681
(87) International publication number: WO 2016/005163

(56) References cited:
- EP-A2- 2 085 302
- WO-A1-2007/031943
- WO-A2-2011/093993
- IT-A1- PD20 110 302

## Description

The present invention concerns a bicycle saddle assembly and in particular a racing bicycle saddle assembly.

A racing bicycle saddle assembly, but also a so-called tourist bicycle saddle assembly, features a definite construction scheme, whoever its manufacturer is, even though its shape and dimensions may vary. A saddle assembly of this type comprises in particular, besides the true saddle, means to fix the saddle to the top of the tubular seatpost of the bicycle.

The saddle in turn comprises:
a hull featuring a midplane, generally made of PVC, provided with a padding; and
hull supporting means comprising a pair of properly shaped metal rods, called saddle stems, which are arranged symmetrically under the hull and at whose ends the hull stands.

Said means for fixing the saddle to the top of the seatpost comprise in turn a head which constitutes the top of the tubular seatpost of the bicycle. The head is provided with clamping means suitable for tightening the stems so as to hold the saddle in position, constrained to the seatpost. The other end of the seatpost is inserted in the steering-tube of the bicycle's frame.

The distance between the stems in a rectilinear section thereof destined to be clamped by said clamping means as well as the diameter of such stems are identical for all saddles, whichever their shape and dimension are and for any manufacturers or brands. Standardization has been adopted to enable riders to change the brand or model of the saddle while retaining, however, the same seatpost. This fact conditioned and still conditions the construction criteria of saddles, all of which are manufactured with stems of predetermined diameters and distances between the stems (more exactly between the rectilinear and parallel sections of the two stems), as well as of the seatposts, necessarily provided with a head with clamping means appropriate to the stems. Add to this that the rectilinear section of the stems destined to be clamped by the clamping means features a length greater than that strictly necessary so as to make it possible to adjust the position of the saddle with respect to the handlebar of the bicycle within determined limits.

At this point it is worth pointing out that in the sector of racing bicycles (and of their respective accessories) everybody agrees upon the principle whereby the more a bicycle is lightweight, the less exertion is made in using it, so that, the exertion made by a rider being equal, using a lighter bicycle means riding faster. The logic consequence is that the manufacturers of racing bicycle saddles are proned to produce lighter and lighter saddles, even at the cost of obtaining less robust saddles. Saddle assemblies are marketed comprising saddles with very small dimensions and very light, but featuring a reduced structural strength, hence not suitable for riders with more robust and heavy builds. In fact not all of those who should adopt more robust (hence heavier) models of saddle actually do it because this search for lightness - often misunderstood as a synonym for higher efficiency - infects almost all riders.

This extreme search for lightness, which led to the implementation of very light saddles, on the other hand made saddles break rather frequently even in the case of not particularly serious accidents. Such breakages may affect the hull, often too thin and rigid; the stems, made of high-performance and light, but too stiff materials (carbon above all); and the seats (consisting of small hollows cut in the hull) that receive the ends of the stems, which often feature an insufficient development.

It is well known to those skilled in the art that, in the case of an accident, the saddle is one of the first component parts of a bicycle that collide with the ground and consequently it is subject to deformations and breakages. Above all, the hull may break or get deformed, whereas the stems may bend or snap or be uprooted from their respective seats cut into the hull, with the risk of transfixing the unlucky protagonist of the accident.

Stems are very often subject to breakages simply due to sudden and strong stresses dealt to the saddle by riders having a heavy build or being particularly inexpert in using this type of bicycles (for instance when, upon running on a downhill road at a high speed, one ends up in a pothole or runs into a bump of the roadway, in which case the jolt of the rider's body and his/her subsequent fall back onto the saddle might be fatal for stems, which might be severed by the clamps).

A very strong problem felt about by riders at every level (professionals, amateur or just tourists) concerns the so called "staving in" of the saddle, due to the fact that the stems, their seats in the hull, and the hull itself, if stressed by the rider's weight for a long time, tend to progressively collapse, thus causing a depression in the middle part of the saddle. Obviously, the heavier a rider is, the more will the stresses be transmitted to the individual component parts of the saddle which, let's recall it, are always engineered for limit values in terms of both dimensions and weight. In a saddle affected by a "staving in" problem the distance between the upper surface of the saddle and the axis of crankset changes, a problem that can only be solved by replacing the saddle, which - considering the prices of the saddles presently marketed - represents a significant expense, little welcome by those riders (the majority indeed) who are obliged to take this expenses upon themselves. Only teams that play a competitive cycling can count, amongst their "technical sponsors", on a saddle manufacturer in a position to provide new saddles, whenever these are required, free of charge.

It is also to be noted that interchangeability of the hulls is not allowed with the known saddle assemblies described above. As a matter of fact, if one wishes to modify the type of seat (for instance to have it wider or narrower or of a different shape) or breakages or deformations of the saddle or even just a minor staving in of the hull occur, there is nothing to do but buying a new saddle and performing the very long sequence of complicated adjustments required for its correct positioning and specifically:
A) adjusting the height of the saddle with respect to the axis of the crankset;
B) adjusting the distance between the point of the saddle and the handlebar;
C) adjusting the tilt of the saddle with respect to the horizontal line;
D) adjusting the angle of the saddle with respect to the median plane of the frame of the bicycle (a requirement more and more felt about by riders following the orders of an osteopathic or biomechanic specialist).

Said problems can be found in well known saddle's solutions.

As an example, document WO2007/031943 refers to a saddle for bicycles which could be set up according to specific needs of the user as a function of sitting type, esthetic design of the same, load capacity and similar and with said saddle comprising a sitting element comprising an upper surface which define the user contact surface, a bearing element for said sitting fixed with respect to a rigid or mobile frame and with said sitting being fixed to the bearing element so as to allow a removal and/or replacement by the user.

Document EP 2 085 302 A2 refers to a saddle having a venting device which comprises a saddle body having an air-passage structure hollowed on the upper surface of the saddle and connected to the peripheral portion of the saddle itself.

Furthermore, WO2011/093993 discloses a saddle for bicycle whose position is adjustable in longitudinal direction and with said saddle comprising a base, fixing means, a sitting and a toe cap or nose, hocking means of the sitting body to the bearing body, said means allowing a longitudinal movement of the saddle when said saddle is not rigidly fixed to the base.

Document IT PD20 110 302 A1 discloses a bicycle saddle which has a front and a rear part. The rear part can be mounted to the saddle post and the front part is mounted to the rear part. Therefore a purpose of the present invention consists of providing a bicycle saddle assembly wherein the saddle is more robust hence definitely less subject to breakages and to deformations, and in particular to the "staving in" phenomenon, as referred to the known saddle assemblies.

Another purpose consists of providing a saddle assembly wherein the adjustment of the position of the hull with respect to the handlebar of the bicycle is definitely simpler and more practical than in the known saddle assemblies.

A further purpose of the present invention consists of providing a saddle assembly wherein the hull alone can be replaced simply and quickly by a new hull identical thereto or even featuring different characteristics, without being obliged to repeat, among the various adjustments of the saddle, those listed in items C and D above.

The purposes listed above are achieved thanks to a saddle assembly according to the present invention, having the characteristics set forth in the attached claims.

The invention will be more easily understandable upon reading the following description of an exemplary embodiment thereof. In this description reference will be made to the attached drawings, wherein:

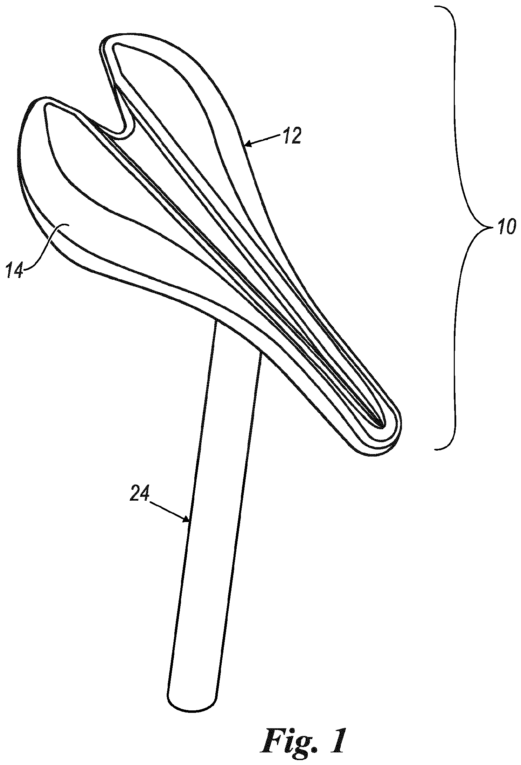

Figure 1 is a perspective view of a saddle assembly according to the present invention, the figure also showing its respective tubular seatpost, which is not part of the assembly;
Figure 2 is a perspective view thereof from another viewpoint;
Figure 3 is a perspective view thereof from another further viewpoint, the hull having been removed from the assembly;
Figure 4 is a bottom perspective view of the hull supporting element only;
Figure 5 is a top perspective view of the same supporting element shown in Figure 4;
Figure 6 is a bottom perspective view of the hull alone;
Figure 7 is a perspective view of the upper section of the seatpost with its respective head, the latter only being part of said assembly;
Figure 8 shows an enlarged detail of the saddle assembly according to the present invention;
Figure 9 is a bottom perspective view of a variant of the hull, wherein the latter is provided with shock absorbing means;
Figure 10 is a perspective view of a half of the hull shown in Figure 9 obtained by longitudinally cross-sectioning it along a median vertical plane.

As shown in the figures, the saddle assembly 10 comprises a saddle 12 which comprises in turn a hull 14 and means for supporting the hull 14, indicated by the numeral 16. The figures also show that the hull 14 features a midplane which normally coincides with the plane of the bicycle frame (unless there are special requirements). The hull 14 is made for instance of PVC, but it can also be made of any other suitable material that couples a sufficient stiffness with lightness. Depending on the softness degree one wishes to get for the saddle, the hull is made in different thicknesses. Just for example: a "stiff or performance" saddle features a hull that is thin, lightweight, consisting of a base, which is conveniently identical for all hulls, and a simple surface finish made of a nonskid leather; a "soft or comfort" saddle features a hull that includes internal thereto, between the base and the leather surface finish, a layer of a conventional gummy and tender material, having a thickness variable as a function of the desired softness degree.

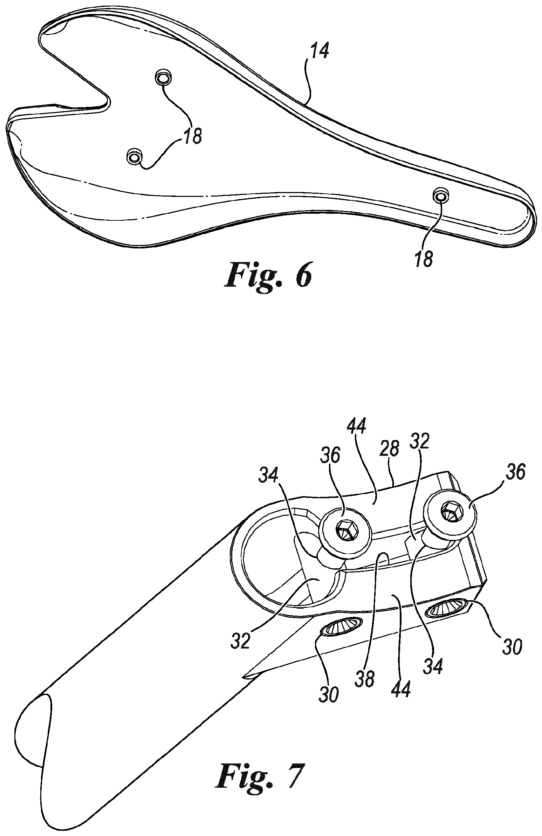

In the base of the hull 14 there are shrouded three nut screws 18 (Figure 6) arranged in correspondence with the angles of an isosceles triangle whose axis of symmetry lays in the midplane of the hull 14. More information will be given later about the function of such nut screws.

Said means 16 for supporting the hull 14 substantially consist of a substantially stiff support element featuring a flattened shape, also featuring a midplane destined to coincide with the midplane of the hull 14. The support element 16 is suitable for being received in the hull 14 and its plan shape roughly follows the plan shape of the hull 14 in order to offer a solid support to all parts of the hull 14. The support element 16 is conveniently made of a material that is substantially stiff, even through lightweight and features a high mechanical strength, for instance Ergal 7075, titanium, or carbon.

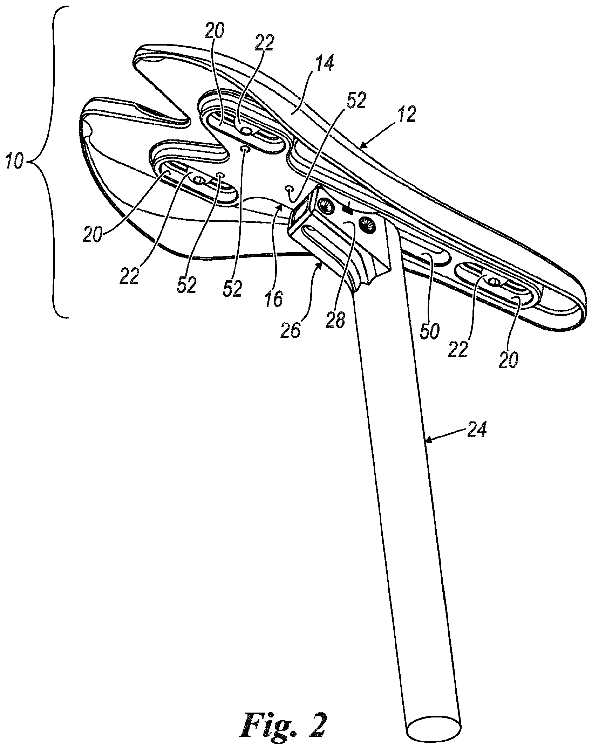

As better shown especially in Figures 2-5, the support element 16 has three slots 20 whose axes are parallel to the midplane of the support element 16. The mid points of the slots 20 are also arranged in correspondence with the vertices of an isosceles triangle identical to that according to which the nut screws 18 (Figure 6) of the hull 14 are arranged, the axis of symmetry of such triangle laying in said midplane. On the opposed side edges of every slot 20 abuts the head of a corresponding screw 22 whose threaded shank goes through the slot 20 and is screwed in its corresponding nut screw 18 of the hull 14. The purpose of the slots 20 is to make it possible a given maximum displacement (for instance 15 mm onward and 15 mm backward as referred to the central position of the slot) of the hull 14 with respect to the support element 16 in the direction contained in said midplane, thus allowing to adjust the position of the hull 14 with respect to the support element 16 hence the distance of the hull from the handlebar in an extremely simple way, being it sufficient for this purpose to slacken the screws 22, to reposition the hull 14, and to tighten the screws 22 again.

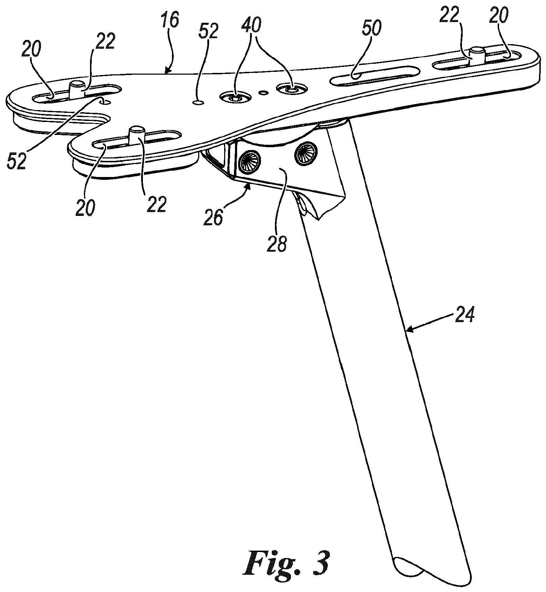

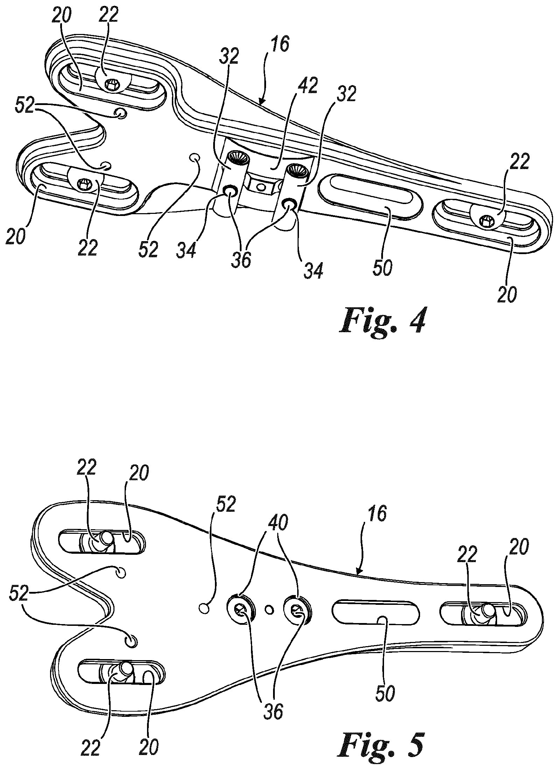

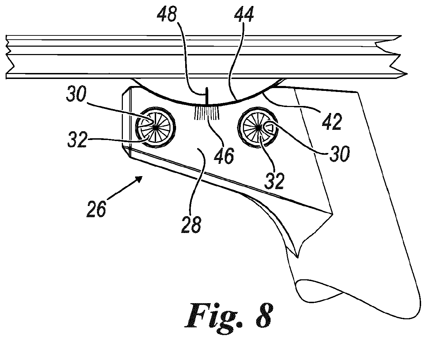

As already said, the assembly 10 also comprises means for fixing the saddle 12 to the top of a tubular seatpost, referred to in the Figures by the numeral 24. In the specific case here illustrated such fixing means, referred to by the numeral 26 as a whole and being part of the assembly 10, comprise a head 28, which constitutes the upper end of the seatpost 24. In the head 28 there are provided two horizontal and parallel through holes 30, usually perpendicular to the plane of the bicycle frame. In each of these two through holes 30 (see in particular Figures 7 and 8) a respective pawl 32 is rotatably inserted, which presents a transversal threaded hole 34 (Figures 4 and 7) whose axis is perpendicular to that of the pawl 32 and intersects it. In every hole 34 a corresponding screw 36 is screwed, whose shank does not interfere with the head 28 in that it goes through an opening 38 (Figure 7) cut in the head as well as through a corresponding through hole 40 (Figures 3 and 5) cut in the support element 16. The hole 40 is rather loose to make it possible to vary the tilt of the axis of the screw 36 to a certain extent. The upper mouth of the two openings 40 has the shape of a segment of a sphere so as to receive the segment-of-a-sphere-shaped head of its respective screws 36 so as to make said change of tilt of the screws 36 possible.

It is worth noting that the support element 16 features, on its lower side, a zone, identified by the numeral 42, abutting to the head 28, which mates with a corresponding abutting zone 44 of the latter, the two zones 42 and 44 featuring the same arc-of-a-cycle profile (Figure 8) in the specific case here illustrated. The arc-of-a-circle profile makes it possible, by simply slackening the two screws 36, to adjust the tilt of the support element 16 with respect to the horizontal line to a given extent. Therefore, this operation becomes an extremely simple one. Such adjustment is even more facilitated if a spirit level (not shown in the figures for the sake of simplicity) is embedded in an opening 50 cut in the support element 16 (however, a common level could also be alternatively used, to be leant onto the support element 16), which allows to arrange the latter horizontally; and even more, if providing in correspondence with either said abutting zone 42 or 44, for instance on a side of the head 28 as shown in Figure 8, a graduated indicator 46, for instance a degree-graduated one, and, in correspondence with the remaining zone 44 or 42, an indicator mark 48. Having leveled the support element 16 in order to have the saddle set to the desired positive or negative tilt with respect to the horizontal line, it is simply enough to check to what position of the graduated indicator 46 does the indicator notch 48 correspond and to make it rotate either clockwise or counterclockwise (the screws 36 being slackened), by the desired number of degrees (taking advantage of the graduated indicator 46) the support element 16 with respect to the head 28, to subsequently tighten the screws 36, to place above the support element 16 the hull 14, and to finally tighten the screws 22 so as to lock it in position.

It is now apparent how much is it simple, in the case of the saddle assembly 10, to replace the hull 14 in order to modify the type of seating or to replace a hull that is damaged or a hull one wishes to change for any reasons, by simply operating on the screws 22, without being obliged to replace the complete saddle and to carry out all adjustments that are necessary in conventional saddle assemblies (the only adjustments to be carried out being, at the worst, those indicated in items A and B here above. As a matter of fact, since the hull 14 is constrained to the support element 16, after positioning this one, the hull 14 is also automatically and perfectly positioned, at least for that which concerns adjustments C and D. If said tilts of the support element 16 with respect to the horizontal line and with respect to the median plane of the frame remain unchanged, then these tilts will be the same for the new hull 14 too, the only adjustments to be made being, if any, that relevant to the elevation of the support element 16, should the new hull 14 have a thickness different from the previous one (adjustment according to item A), and that relevant to the distance of the hull 14 from the handlebar, should the length of the new hull 14 be different from the previous one (adjustment according to item B).

Thanks to the present invention, any rider can have several models of hull at his/her disposal for different situations, different from each other in dimensions and comfortableness (softness) of the seating, interchangeable in an extremely easy and quick manner according to his/her own competitive, physiological, or just aesthetic needs.

Thanks to the stiffness and non-deformability of the support element, the saddle assembly according to the present invention also offers the advantage of being able to know the sagging degree (adaption to the rider's weight) of the seat (in practice, the upper soft portion of the hull), whereby it is possible to adjust the height of the saddle (once only, upon mounting the new saddle) accordingly, being sure that the saddle will always react to the rider's weight in the same way, i.e. by always sagging by the same amount, without undergoing any other type of modification over time, thus preventing those expensive replacements and continual checks and adjustments which are necessary when using traditional saddles. All of this results in a substantial saving of costs and time, being it not necessary any longer to seek the help of skilled mechanics.

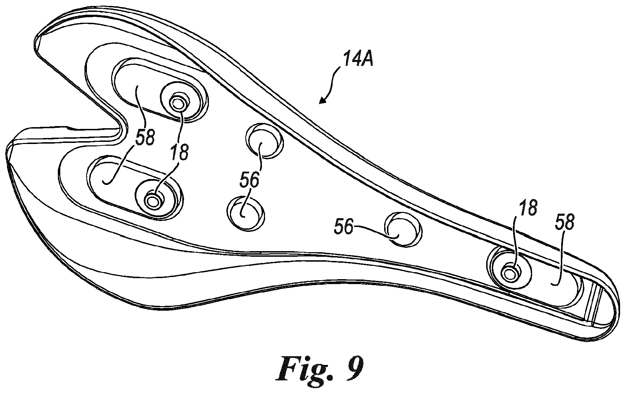

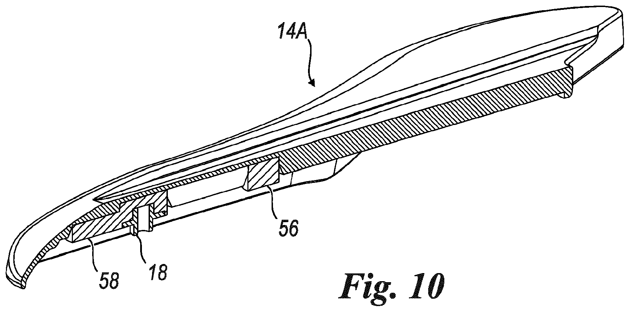

The variant of hull depicted in Figures 9 and 10 and identified by 14A differs from the hull 14 in that it comprises shock-absorbing means through which the hull 14A leans on the support element 16. In the specific case depicted in Figures 9 and 10, there are two types of shock-absorbing means. A former type consists of three simple cylindrical pads 56 fixed under the hull 14A, and specifically in its central section, and arranged according to the vertices of an isosceles triangle (Figure 9) whose axis of symmetry coincides with the midplane of the hull. The cylindrical pads 56 are made of an appropriate elastic material, for instance caoutchouc of different densities or even better Noene®.

A second type of shock-absorbing means consists, in the specific case here considered, of three oblong pads 58, also fixed under the hull 14A, made of the same material as the cylindrical pads 56 and also arranged according to the vertices of an isosceles triangle whose axis of symmetry coincides with the midplane of the hull. Two of these oblong pads 58 are arranged symmetrically in the rear part of the hull 14A and one in the front part. Close to an end of the oblong pads 58 there is provided a nut screw 18 (Figure 9) shrouded therein which performs the same function as the nut screws identified by the same reference numeral used in the hull 14 (Figure 6). Figure 10 shows, longitudinally cross-sectioned, one only (that closest to the point of the hull 14A) of the oblong pads 58, along with its respective nut screw 18, the remaining two being identical thereto but arranged overturned. Figure 10 also shows, cross-sectioned, one of the three cylindrical pads 56, the remaining two being identical thereto.

It is also worth pointing out that the saddle assembly according to the present invention also makes it possible to easily and safely carry with himself/herself a number of accessories which might be indispensable for those who make long journeys by bicycle. As a matter of fact the support element 16, thanks to its extension and stiffness, represents an ideal support for one or several kits each containing a set of accessories. These kits can be easily fixed to the support element 16, for instance by three screws (not shown for the sake of simplicity) to be inserted in their respective threaded holes 52 provided in the lower face of the support element 16.

The list of the accessories that might be carried with himself/herself can comprise, for instance:
- a bike bottle holder kit (according to the triathlon athletes' style);
- a bike helmet holder kit;
- a garment-bag kit (including, for instance, a waterproof cape, a cap, or others);
- a tool-bag kit comprising cover disassembling tools and/or maintenance keys;
- an anti-splash mudguard for rainy days;
- a kit comprising a safety lights, stop lights, turn indicators, reflector plates, and the like;
- a kit comprising labels, start numbers, and the like kit;
- a kit comprising a transponder, a telephone set, a camera, a navigator, or other electronic accessories;
- a kit comprising a bicycle pump or a tire inflation can and spare tubular tires.

## Claims

1. A bicycle saddle assembly (10) comprising a saddle (12) and means (26) for fixing the saddle (12) to the top of a respective seatpost (24) of the bicycle, the saddle (12) comprising in turn a hull (14; 14A) featuring a midplane and means (16) for supporting the hull (14; 14A) which the latter is removably fixed to, the support means (16) engaging said fixing means (26) to lock the saddle (12) in position, said support means comprising a substantially stiff support element (16), suitable for being received in the hull (14; 14A) and featuring a midplane coincident with that of the hull (14;14A), whose plan shape roughly follows the plan shape of the hull (14; 14A) so as to provide a solid support to all parts of the hull (14; 14A) and wherein said fixing means (26) include means (42, 44) for adjusting the tilt of the saddle (12) with respect to the horizontal line,
the hull (14; 14A) being fixed to the support element (16) by means (18, 20, 22) that make it possible to adjust the position of the hull (14; 14A) with respect to the handlebar of the bicycle, **characterized in that** means (26) for fixing the saddle (12) to the upper end of the seatpost (24) comprise a head (28) which is designed to constitute the upper end of the seatpost (24), in the head (28) two horizontal and parallel through holes (30) being provided, in the two through holes (30) a respective pawl (32) being rotatably inserted, every pawl (32) having a threaded hole (34) whose axis is perpendicular to that of the pawl (32) and intersects it, in every threaded hole (34) a correspondent screw (36) being screwed whose shank goes through the support element (16) as well as through the head (28) without interfering, the adjusting means being defined by a zone (42) of the lower surface of the support element (16) and by a corresponding zone (44) of said head (28), with said zone (42) being conjugated with the corresponding zone (44) whenever the two screws (36) are tightened.

2. A saddle assembly (10) according to claim 1, **characterized in that** said means (18, 20, 22) allowing to adjust the position of the hull (14; 14A) with respect to the handlebar of the bicycle comprise three nut screws (18) fixed to the hull (14; 14A) and arranged in correspondence with the angles of an isosceles triangle whose axis of symmetry lays in the midplane of the hull (14;14A); and three screws (22) screwed in their respective nut screws (18) and whose shanks are received in corresponding through slots (20) cut in the support element (16) and whose axes are parallel to the midplane of the support element (16).

3. A saddle assembly (10) according to claim 2, wherein the through slots (20) in which the shanks of the screws (22) are received are slots (20) featuring axes parallel to the direction according to which the position of the hull (14; 14A) is to be adjusted with respect to the handlebar of the bicycle.

4. A saddle assembly (10) according to any one of the preceding claim, wherein the zone (42) of the lower surface of the support element (16) couples with its corresponding zone (44) of said head (28) according to one and the same arc-of-a-circle profile, said fixing means (26) thus also constituting means that make it possible to adjust the tilt of the saddle (12) with respect to the horizontal line.

5. A saddle assembly (10) according to claim 4, wherein on the head (28), adjacent to the arc-of-a -circle profile (44), there is provided a graduated indicator (46), whereas on the support element (16), adjacent to the profile (42), there is provided a reference mark (48) .

6. A saddle assembly (10) according to claim 5, wherein the graduated indicator (46) is graduated in sexagesimal degrees.

7. A saddle assembly (10) according to claim 1, wherein in the support element (16) there is provided an opening (50) in which a spirit level is inserted, which makes it possible to arrange the support element (16) horizontally.

8. A saddle assembly (10) according to claim 1, wherein under the support element (16) there are provided means (52) for fixing thereto one or several kits containing accessories helpful for riders.

9. A saddle assembly (10) according to claim 1, wherein between the hull (14A) and the support element (16) shock- absorbing means (56, 58) are interposed.

10. A saddle assembly (10) according to claims 2 or 3, wherein the nut screws (18) are fixed to respective shock- absorbing means (58) fixed in turn to the hull (14A).

11. A saddle assembly (10) according to claim 10, wherein besides the shock-absorbing means (58) which the nut screws (18) are fixed to other shock-absorbing means (56) are provided.

12. A saddle assembly (10) according to claims 9 to 11, wherein the shock-absorbing means (56, 58) are made of caoutchouc or Noene.

13. A saddle assembly (10) according to any one of the preceding claims and a seatpost (24), wherein said head (28) constitutes the upper end of the seatpost (24).

## Patentansprüche

1. Fahrradsattelbaugruppe (10), umfassend einen Sattel (12) und Mittel (26) zum Befestigen des Sattels (12) auf der Oberseite einer jeweiligen Sattelstütze (24) des Fahrrads, wobei der Sattel (12) seinerseits eine Schale (14; 14A) mit einer Mittelebene und Mittel (16) zum Stützen der Schale (14; 14A) umfasst, an denen letztere lösbar befestigt ist, wobei das Stützmittel (16) mit den besagten Befestigungsmitteln (26) in Eingriff steht, um den Sattel (12) in seiner Position zu verriegeln, wobei das besagte Stützmittel ein im Wesentlichen steifes Stützelement (16) umfasst, das geeignet ist, in die Schale (14, 14A) aufgenommen zu werden, und eine Mittelebene aufweist, die mit derjenigen der Schale (14; 14A) übereinstimmt, dessen Grundrissform annähernd der Grundrissform der Schale (14; 14A) folgt, um allen Teilen der Schale (14; 14A) einen festen Halt zu verleihen, und worin die besagten Befestigungsmittel (26) Mittel (42, 44) zum Einstellen der Neigung des Sattels (12) in Bezug auf die Horizontallinie beinhalten, wobei die Schale (14; 14A) an dem Stützelement (16) durch Mittel (18, 20, 22) befestigt ist, die es ermöglichen, die Position der Schale (14; 14A) in Bezug auf die Lenkstange des Fahrrads einzustellen, **dadurch gekennzeichnet, dass** die Mittel (26) zum Befestigen des Sattels (12) am oberen Ende der Sattelstütze (24) einen Kopf (28) umfassen, der dazu ausgelegt ist, das obere Ende der Sattelstütze (24) zu bilden, wobei in dem Kopf (28) zwei horizontale und parallele Durchgangslöcher (30) vorgesehen sind, wobei in den zwei Durchgangslöchern (30) eine jeweilige Sperre (32) drehbar eingesetzt ist, wobei jede Sperre (32) ein Gewindeloch (34) aufweist, dessen Achse senkrecht zu derjenigen der Sperre (32) verläuft und diese schneidet, wobei in jedes Gewindeloch (34) eine entsprechende Schraube (36) eingeschraubt ist, deren Schaft sowohl durch das Stützelement (16) als auch durch den Kopf (28) ohne Behinderung hindurchgeht, wobei die Einstellmittel durch einen Bereich (42) der unteren Oberfläche des Stützelements (16) und durch einen entsprechenden Bereich (44) des besagten Kopfes (28) definiert sind, wobei der besagte Bereich (42) mit dem entsprechenden Bereich (44) verbunden ist, wann immer die zwei Schrauben (36) festgezogen sind.

2. Sattelbaugruppe (10) nach Anspruch 1, **dadurch gekennzeichnet, dass** die besagten Mittel (18, 20, 22), die das Einstellen der Position der Schale (14; 14A) in Bezug auf die Lenkstange des Fahrrads ermöglichen, drei Mutterschrauben umfassen, die an der Schale (14; 14A) befestigt sind und in Übereinstimmung mit den Winkeln eines gleichschenkligen Dreiecks angeordnet sind, dessen Symmetrieachse in der Mittelebene der Schale (14; 14A) liegt; und drei Schrauben (22), die in ihre jeweiligen Mutterschrauben (18) eingeschraubt sind und deren Schäfte in entsprechenden Durchgangsschlitzen (20), die in das Stützelement (16) eingeschnitten sind, aufgenommen werden und deren Achsen parallel zur Mittelebene des Stützelements (16) verlaufen.

3. Sattelbaugruppe (10) nach Anspruch 2, worin die Durchgangsschlitze (20), in denen die Schäfte der Schrauben (22) aufgenommen werden, Schlitze (20) sind, die Achsen aufweisen, die parallel zu der Richtung verlaufen, gemäß der die Position der Schale (14, 14A) in Bezug auf die Lenkstange des Fahrrads einzustellen ist.

4. Sattelbaugruppe (10) nach irgendeinem der vorangegangenen Ansprüche, worin sich der Bereich (42) der unteren Oberfläche des Stützelements (16) mit seinem entsprechenden Bereich (44) des besagten Kopfes (28) gemäß ein und demselben Kreisbogenprofil verbindet, wobei die besagten Befestigungsmittel (26) somit auch Mittel darstellen, die es ermöglichen, die Neigung des Sattels (12) in Bezug auf die Horizontallinie einzustellen.

5. Sattelbaugruppe (10) nach Anspruch 4, worin auf dem Kopf (28), angrenzend an das Kreisbogenprofil (44), eine abgestufte Anzeige (46) vorgesehen ist, wohingegen auf dem Stützelement (16), angrenzend an das Profil (42), eine Referenzmarkierung (48) vorgesehen ist.

6. Sattelbaugruppe (10) nach Anspruch 5, worin die abgestufte Anzeige (46) in Sexagesimalgraden abgestuft ist.

7. Sattelbaugruppe (10) nach Anspruch 1, worin in dem Stützelement (16) eine Öffnung (50) vorgesehen ist, in die eine Wasserwaage eingesetzt ist, die es ermöglicht, das Stützelement (16) horizontal anzuordnen.

8. Sattelbaugruppe (10) nach Anspruch 1, worin unter dem Stützelement (16) Mittel (52) vorgesehen sind, um daran ein oder mehrere Kits zu befestigen, die hilfreiches Zubehör für Fahrer enthalten.

9. Sattelbaugruppe (10) nach Anspruch 1, worin zwischen der Schale (14A) und dem Stützelement (16) stoßabsorbierende Mittel (56, 58) angeordnet sind.

10. Sattelbaugruppe (10) nach Anspruch 2 oder 3, worin die Mutterschrauben (18) an jeweiligen stoßabsorbierenden Mitteln (58) befestigt sind, die ihrerseits an der Schale (14A) befestigt sind.

11. Sattelbaugruppe (10) nach Anspruch 10, worin neben den stoßabsorbierenden Mitteln (58), an denen die Mutterschrauben (18) befestigt sind, weitere stoßabsorbierende Mittel (56) vorgesehen sind.

12. Sattelbaugruppe (10) nach den Ansprüchen 9 bis 11, worin die stoßabsorbierenden Mittel (56, 58) aus Kautschuk oder Noene hergestellt sind.

13. Sattelbaugruppe (10) nach irgendeinem der vorangegangenen Ansprüche und Sattelstütze (24), worin der besagte Kopf (28) das obere Ende der Sattelstütze (24) bildet.

## Revendications

1. Ensemble selle de bicyclette (10) comprenant une selle (12) et des moyens (26) pour fixer la selle (12) au sommet d'une tige de selle (24) respective de la bicyclette, la selle (12) comprenant à son tour une coque (14, 14A) présentant un plan médian et des moyens (16) pour supporter la coque (14, 14A) auxquels cette dernière est fixée de manière amovible, les moyens de support (16) étant accouplés auxdits moyens de fixation (26) pour bloquer la selle (12) en position, lesdits moyens de support comprenant un élément de support (16) sensiblement rigide, adapté pour être reçu dans la coque (14, 14A) et présentant un plan médian qui coïncide avec celui de la coque (14, 14A), dont la forme plane suit grossièrement la forme plane de la coque (14, 14A) afin de fournir un support solide à toutes les parties de la coque (14, 14A) et dans lequel lesdits moyens de fixation (26) comprennent des moyens (42, 44) pour ajuster l'inclinaison de la selle (12) par rapport à la ligne horizontale, la coque (14, 14A) étant fixée à l'élément de support (16) par des moyens (18, 20, 22) qui permettent d'ajuster la position de la coque (14, 14A) par rapport au guidon de la bicyclette, **caractérisé en ce que** les moyens (26) pour fixer la selle (12) à l'extrémité supérieure de la tige de selle (24) comprennent une tête (28) conçue pour constituer l'extrémité supérieure de la tige de selle (24), deux trous traversants (30) horizontaux et parallèles étant disposés dans la tête (28), un cliquet (32) respectif étant inséré de manière rotative dans les deux trous traversants (30), chaque cliquet (32) comportant un trou fileté (34) dont l'axe est perpendiculaire à celui du cliquet (32) et le croise, une vis (36) correspondante étant vissée dans chaque trou fileté (34), dont la tige traverse l'élément de support (16) ainsi que la tête (28) sans interférence, les moyens d'ajustement étant définis par une zone (42) de la surface inférieure de l'élément de support (16) et par une zone (44) correspondante de ladite tête (28), ladite zone (42) étant conjuguée à la zone (44) correspondante chaque fois que les deux vis (36) sont serrées.

2. Ensemble selle (10) selon la revendication 1, **caractérisé en ce que** lesdits moyens (18, 20, 22) permettant d'ajuster la position de la coque (14, 14A) par rapport au guidon de la bicyclette comprennent trois écrous de vissage (18) fixés à la coque (14, 14A) et disposés au niveau des angles d'un triangle isocèle dont l'axe de symétrie repose dans le plan médian de la coque (14, 14A), et trois vis (22) vissées dans leurs écrous de vissage (18) respectifs et dont les tiges sont reçues dans des fentes traversantes (20) correspondantes découpées dans l'élément de support (16) et dont les axes sont parallèles au plan médian de l'élément de support (16).

3. Ensemble selle (10) selon la revendication 2, dans lequel les fentes traversantes (20) dans lesquelles les tiges des vis (22) sont reçues sont des fentes (20) qui présentent des axes parallèles à la direction selon laquelle la position de la coque (14, 14A) doit être ajustée par rapport au guidon de la bicyclette.

4. Ensemble selle (10) selon l'une des revendications précédentes, dans lequel la zone (42) de la surface inférieure de l'élément de support (16) est accouplée à sa zone (44) correspondante de ladite tête (28) selon un et le même profil en arc de cercle, lesdits moyens de fixation (26) constituant donc également des moyens qui permettent d'ajuster l'inclinaison de la selle (12) par rapport à la ligne horizontale.

5. Ensemble selle (10) selon la revendication 4, dans lequel un indicateur gradué (46) se trouve sur la tête (28), adjacent au profil en arc de cercle (44), alors qu'une marque de référence (48) se trouve sur l'élément de support (16), adjacent au profil (42).

6. Ensemble selle (10) selon la revendication 5, dans lequel l'indicateur gradué (46) est gradué en degrés sexagésimaux.

7. Ensemble selle (10) selon la revendication 1, dans lequel l'élément de support (16) comprend une ouverture (50) dans laquelle un niveau à bulle d'air est inséré, ce qui permet de disposer l'élément de support (16) horizontalement.

8. Ensemble selle (10) selon la revendication 1, dans lequel des moyens (52) sont disposés sous l'élément de support (16) pour y fixer un ou plusieurs kits contenant des accessoires utiles pour les cyclistes.

9. Ensemble selle (10) selon la revendication 1, dans lequel des moyens amortisseurs (56, 58) sont intercalés entre la coque (14A) et l'élément de support (16).

10. Ensemble selle (10) selon les revendications 2 ou 3, dans lequel les écrous de vissage (18) sont fixés à des moyens amortisseurs (58) respectifs fixés à leur tour à la coque (14A).

11. Ensemble selle (10) selon la revendication 10, dans lequel en plus des moyens amortisseurs (58) auxquels les écrous de vissage (18) sont fixés, d'autres moyens amortisseurs (56) sont prévus.

12. Ensemble selle (10) selon les revendications 9 à 11, dans lequel les moyens amortisseurs (56, 58) sont constitués de caoutchouc ou Noene.

13. Ensemble selle (10) selon l'une des revendications précédentes et une tige de selle (24), dans lequel ladite tête (28) constitue l'extrémité supérieure de la tige de selle (24).
